# EUROPÄISCHE PATENTANMELDUNG

(11) **EP 1 363 019 A2**
(43) Veröffentlichungstag der Anmeldung: **19.11.2003**
(21) Anmeldenummer: 03009570.7
(22) Anmeldetag: 28.04.2003
(51) Int. Cl.: F03D 1/00, F03D 7/00, F03D 9/00

(54) **Mehrstufiger Windgenerator mit Wellen und Kupplungsystem**

(30) Priorität: 18.05.2002 DE 10222179; 24.07.2002 DE 10233589
(71) Anmelder: SIEMENS AKTIENGESELLSCHAFT, 80333 München (DE)
(72) Erfinder: Nagy, Sandor, 99094 Hochheim (DE)

(57) **Zusammenfassung**

Der Erfindung liegt die Aufgabe zugrunde, einen Windgenerator anzugeben, der sowohl bei großen Windkraftanlagen als auch bei kleineren Ausführungen mit hohem Wirkungsgrad eingesetzt werden kann.

Erfindungsgemäß gelingt die Lösung der Aufgabe dadurch, dass nach einen windkraftnutzenden mechanischen Einrichtung, unabhängig welcher Bauart, mehrere Generatoren entweder hintereinander oder seitlich angeordnet sind, oder aus einer Kombination beider Aufbauarten besteht.

Die Erfindung betrifft einen mehrstufigen Windgenerator, bestehend aus mehreren hintereinander oder nebeneinander angeordneten Generatoren, welche durch die verschiedenartigsten Kupplungssysteme miteinander verbunden sind.

## Beschreibung

Die Erfindung betrifft einen mehrstufigen Windgenerator, bestehend aus mehreren hintereinander oder nebeneinander angeordneten Generatoren, welche durch die verschiedenartigsten Kupplungssysteme miteinander verbunden sind.

Die Erfindung betrifft einen mehrstufigen Windgenerator, bei dem mehrere Generatoren (mindestens zwei) hintereinander angeordnet und durch Wellen und Kupplungssysteme miteinander verbunden sind.
Heutige Windgeneratoren bestehen aus Windrad und einem Generator durch eine Welle verbunden, demgegenüber sind bei dem erfindungsgemäßen mehrstufigen Windgenerator mehrere Generatoren (mindestens zwei) durch Wellen und Kupplungssysteme miteinander verbunden, wobei die Wellen und Kupplungen so ausgeführt sind, dass sie nacheinander in einer bestimmten Reihenfolge die einzelnen Generatoren zuschalten oder lösen. Ein Generator (Generator 1) läuft immer mit dem Windrad mit, aber bei steigenden Drehzahlen schaltet sich zum Generator 1 der Generator 2 und bei weiterer Erhöhung der Drehzahl Generator 3 oder eventuell noch weitere zu, und bei fallenden Drehzahlen kuppeln sie sich in umgekehrter Reihenfolge, das heißt zuerst der Generator der als letzter zugeschaltet wurde, Generator 3, dann bei weiter fallenden Drehzahlen Generator 2, ab.

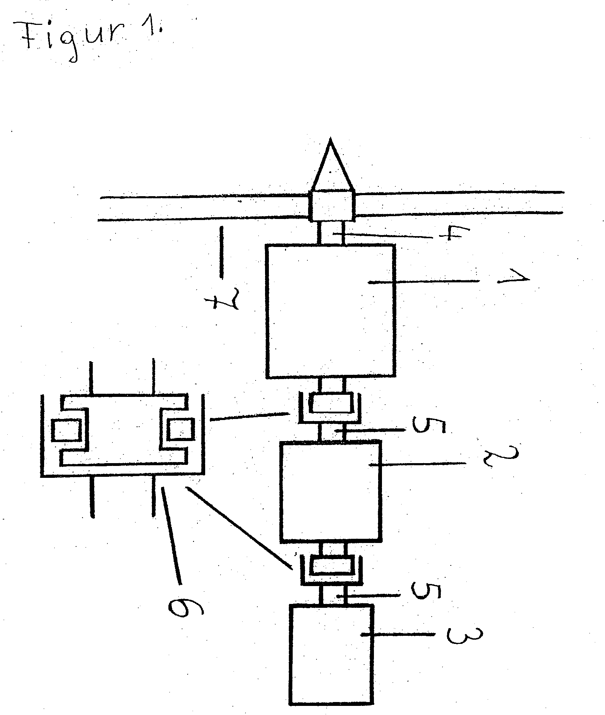

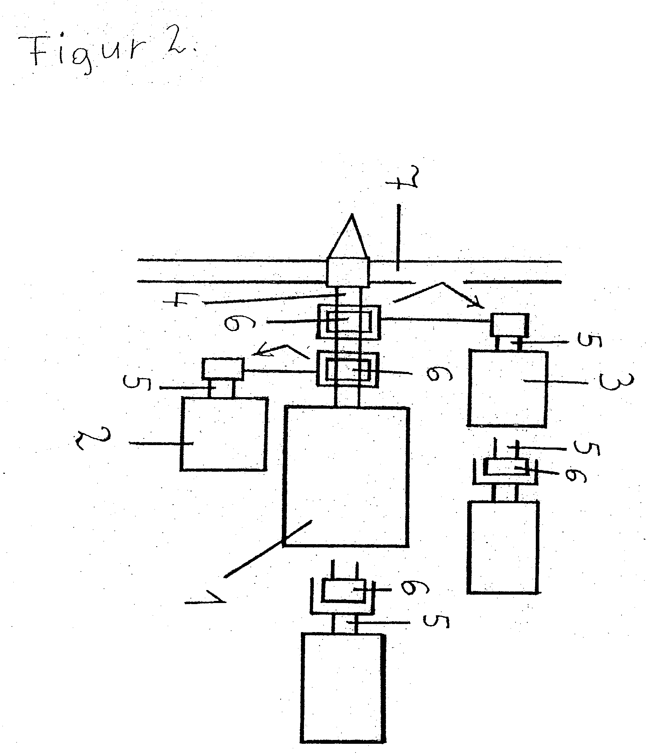

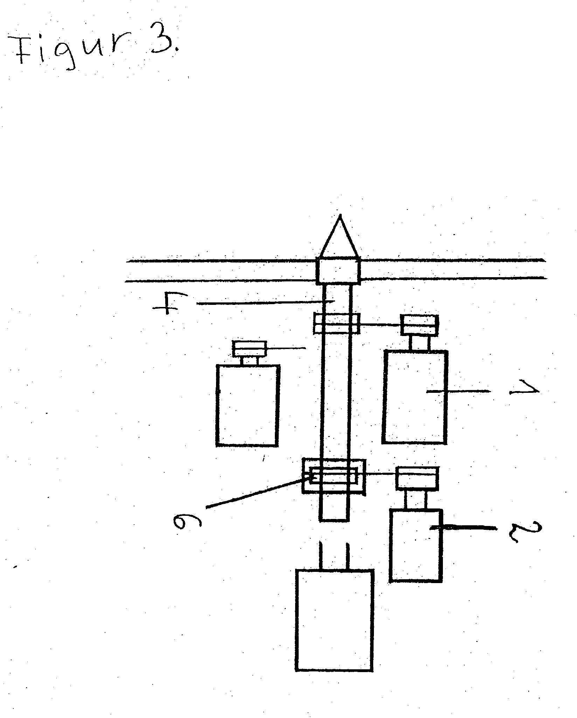

Bei konstanten Windstärken laufen auch die Generatoren unabhängig von der jeweiligen Kupplungskonstellation der Generatoren konstant.
Die Kraftübertragung von der Hauptwelle 4 auf die Generatoren 1, 2, 3 oder noch weitere, kann durch Reihenaufbau (hintereinander wie bei Figur 1) oder durch parallel oder seitlichen Aufbau (in Figur 3 verdeutlicht) aber auch durch eine Kombination aus beiden Möglichkeiten (in Figur 2 dargestellt) erfolgen.

Es können die verschiedenartigsten Kupplungssysteme angewandt werden, so beispielsweise verschiedlichste Arten von Fliehkraftkupplungen oder unterschiedlichsten Arten von hydraulischen Kupplungen (Drehmomentwandler) eingesetzt werden.

Die Kupplungen können so ausgeführt sein, dass sie sich durch Fernsteuerung zuschalten oder lösen lassen.

Mit dem mehrstufigen Windgenerator kann eine größere Breite an Windstärken zur Stromerzeugung genutzt werden.

Eingesetzt werden kann er sowohl bei großen Windkraftanlagen, als auch in kleinerer Ausführung zur Stromerzeugung für Hausanlagen, Wohnwagen, Camping, Boote, Schiffe und noch weitere Bereiche, in denen Windkraft zur Stromerzeugung genutzt wird.

Je nach Nutzungsart und Bauart ist die Größe der einzelnen Generatoren, sowie ihr Größenverhältnis zueinander variabel.

Figur 1 zeigt einen mehrstufigen Windgenerator mit hintereinander in Reihenaufbau gekoppelten Generatoren 1, 2, 3.

Die Generatoren besitzen durchgehende Generatorenwellen, welche durch entsprechende Kupplungen miteinander verbunden sind. Jeder Generator 1, 2, 3 besitzt sein eigenes Kupplungsund Wellensystem.

Bei unterschiedlichen Windgeschwindigkeiten und den daraus resultierenden unterschiedlichen Drehzahlen schalten sich zum Generator 1, Generator 2 und Generator 3 zu oder lösen sich wieder.

Figur 2 zeigt eine Kombination aus Reihen- und Parallelaufbau des mehrstufigen Windgenerators.

Hauptgenerator 1 ist mit der Hauptwelle 4 direkt verbunden. Die Generatoren 2 und 3 sind durch Kupplungen 6 mit der Hauptwelle 4 verbunden und seitlich angeordnet.
Der Hauptgenerator 1 dreht sich immer mit der Hauptwelle 4. Die Generatoren 2 und 3 schalten sich nacheinander bei steigenden Drehzahlen zu. Die Kupplungen der Generatoren 2 und 3 können an der Generatorwelle oder an der Hauptwelle 4 angeordnet sein und schalten die Generatoren 2 und 3 automatisch bei wechselnden Drehzahlen zu oder lösen sie wieder.

Figur 3 zeigt alle Generatoren sind parallel oder seitlich zur Hauptwelle 4 angeordnet. Sie sind durch Kupplungen 6 mit der Hauptwelle 4 verbunden, wobei diese entweder an der Hauptwelle 4 oder an den Generatorenwellen angeordnet sein können.

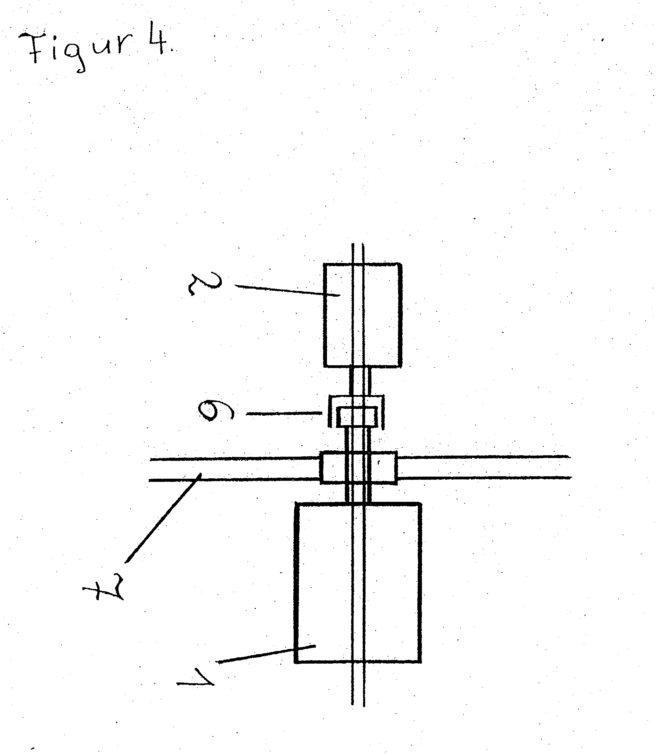

Figur 4 zeigt einen mehrstufigen Windgenerator in Reihenaufbau, wobei das Windrad 7 zwischen den Generatoren 1 und 2 auf der Generatorwelle der ersten Generatorenstufe 1 befestigt ist.
Durch die Kupplung 6 sind die Wellen der Generatoren 1 und 2 miteinander verbunden. Der Generator 2 wird bei steigenden und fallenden Drehzahlen durch die Kupplung 6 zugeschaltet oder gelöst. Bei diesem Aufbau ist eine spezielle Art der Halterung oder eine durchgehende stehende Welle für die erste und zweite Generatorenstufe nötig. Die Generatorenstufen können mit den unterschiedlichsten Arten von Konstruktionen zusammengehalten werden. Unabhängig von der Art der Konstruktion der Halterung ändert sich aber nicht die Funktionsweise des mehrstufigen Windgenerators.

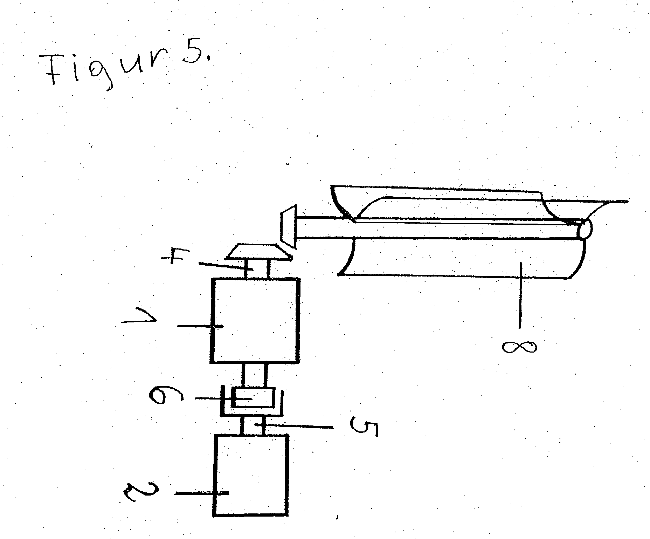

Figur 5 zeigt eine andere Art von Windrädern und verdeutlicht, dass der mehrstufige Windgenerator mit Wellen und Kupplungssystemen in Verbindung mit allen Arten von Windrädern einsetzbar ist. Die Ausführung des jeweiligen Windrades sowie der angewandten Kupplungsarten sind variabel.

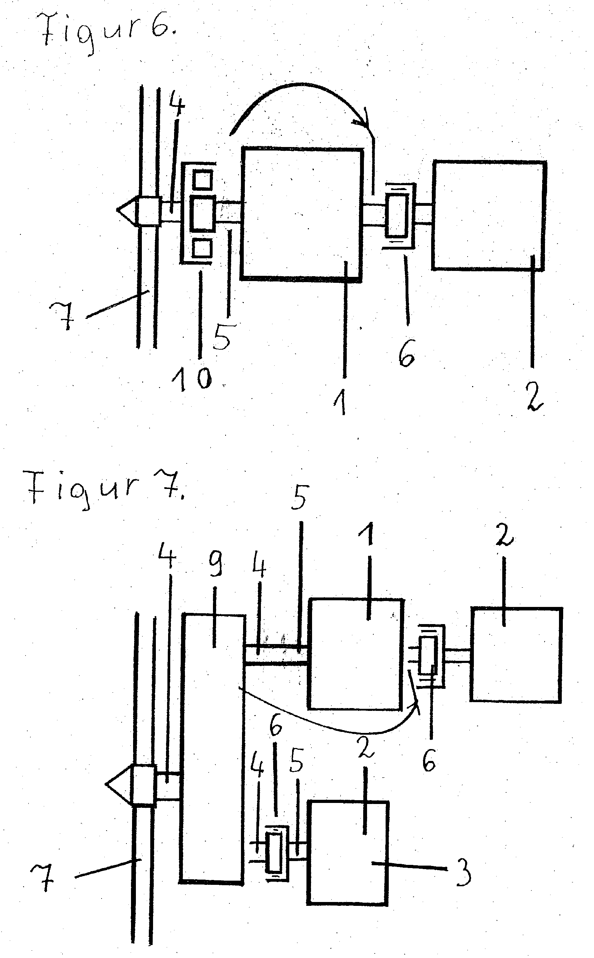

Figur 6 zeigt einen mehrstufigen Windgenerator, bei welchem zwischen dem Windrad 7 und der ersten Generatorstufe 1 ein Planetengetriebe 10 angeordnet ist. Das Planetengetriebe 10 kann vor der ersten Stufe des mehrstufigen Generators oder zwischen den Generatorstufen angeordnet sein.

Figur 7 zeigt ein Windrad mit einem mehrstufigen Generator, wobei zwischen dem Windrad 7 und der ersten Generatorstufe 1 ein Getriebe angeordnet ist. Das Getriebe 9 kann aber auch noch weitere Generatorstufen des mehrstufigen Generators antreiben (Generatorstufe 2 oder 3), welche sich durch eine Kupplung 6 zum Getriebe 9 zuschalten oder vom Getriebe 9 lösen können.

## Patentansprüche

1. Mehrstufiger Windgenerator mit Wellen und Kupplungssystem,
**dadurch gekennzeichnet, dass**
nach einen windkraftnutzenden mechanischen Einrichtung, unabhängig welcher Bauart, mehrere Generatoren entweder hintereinander oder seitlich angeordnet sind, oder aus einer Kombination beider Aufbauarten besteht.

2. Mehrstufiger Windgenerator nach Anspruch 1,
**dadurch gekennzeichnet, dass**
sich die unterschiedlichen Generatorenstufen bei unterschiedlichen Windgeschwindigkeiten zuschalten oder lösen.

3. Mehrstufiger Windgenerator nach Anspruch 1 oder 2,
**dadurch gekennzeichnet, dass** unabhängig vom Aufbau des mehrstufigen Windgenerators und der Anzahl der Generatorenstufen die Reihenfolge der Zuschaltung und die umgekehrte Reihenfolge bei der Abschaltung bestehen bleibt.

4. Mehrstufiger Windgenerator nach einem der vorhergehenden Ansprüche,
**dadurch gekennzeichnet, dass**
die einzelnen Generatorenstufen durch die verschiedensten Arten von Wellen und Kupplungssystemen, auch ferngesteuerten Kupplungssystemen verbunden sind und bei seitlicher Kraftübertragung alle mechanischen Kraftübertragungsarten nutzbar sind und dass bei manchen Aufbauarten die windkraftnutzende mechanische Einrichtung zwischen den Generatorenstufen angeordnet ist.

5. Mehrstufiger Windgenerator nach einem der vorhergehenden Ansprüche,
**dadurch gekennzeichnet, dass**
alle windkraftnutzenden Systeme sowie jede Art von Windrädern anwendbar sind.

6. Mehrstufiger Windgenerator nach einem der vorhergehenden Ansprüche,
**dadurch gekennzeichnet, dass**
die Generatoren durch spezielle Halterungen oder von durchgehenden Wellen gehalten werden.

7. Mehrstufiger Windgenerator nach einem der vorhergehenden Ansprüche,
**dadurch gekennzeichnet, dass**
bei manchen Bauarten zwischen Windrad und der ersten Generatorstufe des mehrstufigen Generators oder zwischen den Stufen des mehrstufigen Generators ein Getriebe unterschiedlichster Art oder ein Planetengetriebe angeordnet ist.

8. Mehrstufiger Windgenerator nach einem der vorhergehenden Ansprüche,
**dadurch gekennzeichnet, dass**
beim Windrad mit mehrstufigem Generator das angeordnete Getriebe auch mehrere Generatorstufen antreibt, wobei sich die Generatorstufen durch Kupplungen zum Getriebe zuschalten oder lösen können.
